# EUROPÄISCHE PATENTSCHRIFT

(11) **EP 2 480 504 B1**
(45) Veröffentlichungstag und Bekanntmachung des Hinweises auf die Patenterteilung: **14.05.2014**
(21) Anmeldenummer: 10755195.4
(22) Anmeldetag: 23.09.2010
(51) Int. Cl.: C02F 3/12, C02F 3/20, C02F 3/00, C02F 3/08

(54) **VERFAHREN UND VORRICHTUNG ZUR BIOLOGISCHEN REINIGUNG VON ABWASSER**
METHOD AND DEVICE FOR BIOLOGICALLY CLEANING WASTEWATER
PROCÉDÉ ET DISPOSITIF D'ÉPURATION BIOLOGIQUE DES EAUX USÉES

(30) Priorität: 25.09.2009 DE 102009045032
(43) Veröffentlichungstag der Anmeldung: 01.08.2012
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2010/064077
(87) Internationale Veröffentlichungsnummer: WO 2011/036222

(56) Entgegenhaltungen:
- DE-A1- 4 019 577
- DE-A1- 4 205 572
- DE-U1- 29 923 252
- US-A1- 2005 077 239
- HÖFKEN M ET AL: "Novel Stirring and Aeration System for Biological and Chemical Reactors", FED / INDUSTRIAL APPLICATIONS OF FLUID MECHANICS (CONFERENCE INFO: PROCEEDINGS OF THE ASME WINTER ANNUAL MEETING, ATLANTA, USA),, Bd. 132, 1. Januar 1991 (1991-01-01), Seiten 47-56, XP009105918,
- HOFKEN M ET AL: "KOMBINIERTES RUHR- UND BEGASUNGSSYSTEM FUR DIE ABWASSER- UND SCHLAMMBEHANDLUNG", KORRESPONDENZ ABWASSER, ABWASSERTECHNISCHE VEREINIGUNG, ST. AUGUSTIN, DE, Bd. 40, Nr. 12, 1. Dezember 1993 (1993-12-01), Seiten 1904-1909, XP000415294, ISSN: 0341-1540

## Beschreibung

Die Erfindung betrifft ein Verfahren und eine Vorrichtung zur biologischen Reinigung von Abwasser.

Aus der DE 40 19 577 A1 ist es bekannt, Abwasser in einem Behandlungsbecken mit Mikroorganismen in Kontakt zu bringen. Durch die Wirkung der Mikroorganismen werden im Abwasser enthaltene Schadstoffe beseitigt. Zur Erzeugung einer möglichst großen Oberfläche sind die Mikroorganismen auf losen, im Abwasser schwimmenden Aufwuchskörpern angesiedelt. Solche Aufwuchskörper können beispielsweise aus Kunststoff hergestellt sein und einen Durchmesser von 0,5 bis 5,0 cm aufweisen. Sie weisen in der Regel ein spezifisches Gewicht im Bereich von 0,9 g/m³ auf und erfahren infolgedessen im Abwasser einen Auftrieb. Eine aus den Aufwuchskörpern und dem Abwasser gebildete Suspension wird üblicherweise mittels eines Rührwerks umgewälzt.

Zur Erzielung einer möglichst guten Reinigungsleistung können mehrere derartige Behandlungsbecken hintereinander geschaltet sein. Dabei wird das Abwasser in jedem der Behandlungsbecken jeweils mit anderen Mikroorganismen in Kontakt gebracht.

Um ein Ausschwemmen der Aufwuchskörper aus einem Behandlungsbecken zu verhindern, ist eine Ablauf- bzw. Überlauföffnung mit einem Sieb versehen. Nach dem Stand der Technik tritt das Problem auf, dass sich vor dem Sieb eine große Menge an Aufwuchskörpern ansammelt und damit ein Abströmen des Abwassers durch die Ablauföffnung behindert.

Um diesem Problem entgegenzuwirken ist zusätzlich zum Rührwerk bei der Überlauföffnung ein Propellerrührwerk vorgesehen. Damit wird eine die Aufwuchskörper vom Sieb wegbewegende Strömung erzeugt.

Das vorsehen solcher Propellerrührwerke ist, insbesondere bei einem Behandlungsbecken mit mehreren Ablauföffnungen, aufwändig. Deren Betrieb erfordert einen hohen Energie- und Wartungsaufwand und ist daher teuer.

Die DE 42 05 572 A1 offenbart ein Verfahren zur biologischen Reinigung von Abwasser mit folgenden Schritten: Bereitstellen eines Behandlungsbeckens mit einem Boden und zumindest einer sich davon mit einer Wandhöhe erstreckenden Wand, mit einer Zulauföffnung und mit zumindest einer Ablauföffnung; Zuführen des Abwassers durch die Zulauföffnung in das Behandlungsbecken; Inkontaktbringen des Abwassers mit Mikroorganismen, welche auf im Behandlungsbecken aufgenommenen losen Aufwuchskörpern angesiedelt sind; Erzeugen einer Strömung mittels einer Vertikalrührvorrichtung und Abführen des durch die Wirkung der Mikroorganismen zumindest teilweise gereinigten Abwassers aus dem Behandlungsbecken durch die Ablauföffnung, wobei die Aufwuchskörper mittels eines im Bereich der Ablauföffnung vorgesehenen Siebs im Behandlungsbecken zurückgehalten werden.

Aus Höfken, M. et al. "Novel Stirring and Aeration System for Biological Chemical Reactors", FED / INDUSTRIAL APPLICATIONS FOR FLUID MECHANICS (CONFERENCE INFO: PROCEEDINGS OF THE ASME WINTER ANNULAR MEETING, ATLANTA, USA) , Bd. 132, 1. Januar 1991, Seiten 47-56 und aus Höfken, M. et al. "Kombiniertes Rühr- und Begasungssystem für die Abwasser- und Schlammbehandlung", Korrespondenz Abwasser, Abwassertechnische Vereinigung, St. Augustin, DE, Band 40, Nr. 12, 1. Dezember 1993, Seiten 1904-1909 ist jeweils ein Vertikalrührwerk mit einem Hyperboloidrührkörper bekannt.

Aufgabe der Erfindung ist es, die Nachteile nach dem Stand der Technik zu beseitigen. Es sollen insbesondere ein Verfahren und eine Vorrichtung angegeben werden, mit denen eine biologische Reinigung von Abwasser mit einem verringerten Aufwand möglich ist. Nach einem weiteren Ziel der Erfindung sollen mit dem Verfahren und der Vorrichtung außerdem Energie eingespart werden.

Diese Aufgabe wird durch die Merkmale der Ansprüche 1 und 4 gelöst. Zweckmäßige Ausgestaltungen der Erfindung ergeben sich aus den Merkmalen der Ansprüche 2 und 3 sowie 5 bis 10.

Nach Maßgabe der Erfindung wird zur biologischen Reinigung von Abwasser ein Verfahren mit folgenden Schritten vorgeschlagen:

Bereitstellen eines Behandlungsbeckens mit einem Boden und zumindest einer sich davon mit einer Wandhöhe erstreckenden Wand, mit einer Zulauföffnung, und mit zumindest einer in einem Bereich vom 0- bis höchstens zum 0,2-fachen der Wandhöhe vorgesehenen Ablauföffnung, wobei die Zulauföffnung und die Ablauföffnung so angeordnet sind, dass deren Entfernung innerhalb des Behandlungsbeckens etwa maximal ist,

zuführen des Abwassers durch die zulauföffnung in das Behandlungsbecken,

Inkontaktbringen des Abwassers mit Mikroorganismen, welche auf im Behandlungsbecken aufgenommenen losen Aufwuchskörpern angesiedelt sind,

Erzeugen einer Strömung mittels einer einen Hyperboloidrührkörper aufweisenden Vertikalrührvorrichtung, so dass eine aus den Aufwuchskörpern und dem Abwasser gebildete Suspension im Bereich einer welle der Vertikalrührvorrichtung zum Boden des Behandwngsbeckens und im Bereich der wand des Behandlungsbeckens zu einer Oberfläche der Suspension bewegt wird, und

Abführen des durch die Wirkung der Mikroorganismen zumindest teilweise gereinigten Abwassers aus dem Behandlungsbecken durch die Ablauföffnung, wobei die Aufwuchskörper mittels eines im Bereich der Ablauföffnung vorgesehenen Siebs im Behandlungsbecken zurückgehalten werden.

Indem erfindungsgemäß mittels eines Hyperboloidrührkörpers im Bereich der wand des Behandlungsbeckens eine zur Oberfläche der Suspension hin gerichtete Strömung erzeugt wird, werden die Auftriebskörper von der in einer bodenseitigen unteren Hälfte des Behandlungsbeckens vorgesehenen Ablauföffnung wegbewegt. Damit kann auf einfache und kostengünstige Weise eine unerwünschte Ablagerung von Aufwuchskörpern im Bereich der Ablauföffnung vermieden und gleichzeitig das Abwasser umgewälzt werden. Es kann insbesondere auf das Vorsehen von Propellerrührwerken zum Freihalten der Ablauföffnungen verzichtet werden.

Sofern im Sinne der vorliegenden Erfindung die Ablauföffnung im Bereich des 0-fachen der Wandhöhe sich befindet, erstreckt sie sich also nicht in die Wand. In diesem Fall befindet sich die Ablauföffnung im Boden des Behandlungsbeckens. Sofern sich die Ablauföffnung im Bereich des 0- bis 0,5-fachen der Wandhöhe befindet, kann sie sich im Boden und in der Wand erstrecken. Sie kann auch nur in der Wand vorgesehen sein und bis zum Boden reichen.

Bei dem Behandlungsbecken kann es sich um ein zylindrisches Behandlungsbecken handeln. In diesem Fall ist das Behandlungsbecken von einer einzigen umlaufenden Wand umgeben. Es kann aber auch sein, dass das Behandlungsbecken rechteckig ausgestaltet ist. In diesem Fall wird das Behandlungsbecken von mehreren Wänden begrenzt. Sofern mehrere Wände das Behandlungsbecken begrenzen und die mehreren Wände eine unterschiedliche Höhe aufweisen, wird unter dem Begriff "Wandhöhe" eine mittlere Wandhöhe verstanden.

Nach der Erfindung werden die Aufwuchskörper mittels eines im Bereich der Ablauföffnung vorgesehenen Siebs im Behandlungsbecken zurückgehalten. Das Sieb kann eine größere Anströmfläche aufweisen als die Ablauföffnung. D. h. das Sieb kann die Ablauföffnung auch über deren Randbereich hinweg überspannen. Es kann auch mit einem Abstand von der Ablauföffnung angebracht sein. In diesem Fall erstreckt sich das Sieb am umlaufenden Rand bis zum Boden oder der Wand, an welcher die Ablauföffnung vorgesehen ist.

Im Sinne der vorliegenden Erfindung wird unter einer "vertikalrührvorrichtung" eine Rührvorrichtung verstanden, bei der an einer im wesentlichen vertikal ausgerichteten welle der Hyperboloidrührkörper angebracht ist. Die welle kann mittels eines Motors angetrieben werden. Bei dem Motor kann es sich um einen Tauchmotor handeln. Es kann aber auch sein, dass der Motor oberhalb einer Oberfläche des Abwassers an einem turmartigen Gerüst angebracht ist, welches auf dem Boden des Behandlungsbeckens abgestützt ist.

Nach der Erfindung wird durch die wirkung des Hyperboloidrührkörpers der Suspension eine Strömung aufgeprägt, welche etwa im Bereich der Welle des Vertikalrührwerks zum Boden des Behandlungsbeckens und im Bereich der Wand des Beckens zu einer Oberfläche der Suspension gerichtet ist. Ferner kann die Strömung in Drehrichtung des Hyperboloidrührkörpers um dessen Achse rotieren.

Die mit der Vertikalrührvorrichtung erzeugte Strömung ist insbesondere im bodenseitigen Randbereich des Behandlungsbeckens aufwärts gerichtet. Sie wirkt damit einer Ablagerung von Aufwuchskörper im Bereich einer hier vorgesehenen Ablauföffnung entgegen.

Die durch die Strömung hervorgerufene Bewegung der Aufwuchskörper in Richtung der Oberfläche der Suspension kann weiter dadurch unterstützt werden, dass Aufwuchskörper mit einem spezifischen Gewicht verwendet werden, welches kleiner als das spezifische Gewicht des Abwassers ist. In diesem Fall erfahren die Aufwuchskörper eine Auftriebskraft, welche zusätzlich zu der im Bereich der Wände nach oben gerichteten Strömung wirkt. Damit kann auf besonders wirkungsvolle Weise eine Ablagerung von Aufwuchskörper im Bereich einer in der unteren Hälfte, vorzugsweise einem unteren Drittel, des Behandlungsbeckens vorgesehenen Ablauföffnung vermieden werden.

Nach einer weiteren Ausgestaltung der Erfindung wird das Abwasser durch zumindest eine im Boden des Behandlungsbeckens vorgesehenen Ablauföffnung abgeführt, welche vorzugsweise in der Nähe einer wand sich befindet. Es kann auch sein, dass das Abwasser durch zumindest eine in der Nähe des Bodens des Behandlungsbeckens vorgesehenen Ablauföffnung abgeführt wird, welche sich vorzugsweise in der Nähe einer wand befindet. Als besonders zweckmäßig hat es sich erwiesen, bei einem rechteckig ausgebildeten Behandlungsbecken die Ablauföffnung im Bereich einer Ecke des Bodens vorzusehen. Sie kann dabei im Boden und/oder in einer Wand im Bereich der Ecke des Bodens vorgesehen sein.

Nach weiterer Maßgabe der Erfindung wird eine Vorrichtung zur biologischen Reinigung von Abwasser vorgeschlagen, umfassend: ein Behandlungsbecken mit einem Boden und zumindest einer sich davon mit einer Wandhöhe erstreckenden Wand, einer Zulauföffnung und mit zumindest einer in einem Bereich vom 0-bis höchstens zum 0,2-fachen der Wandhöhe vorgesehenen und mit einem Sieb zum Zurückhalten von Aufwuchskörpern versehenen Ablauföffnung, wobei die Zulauföffnung und die Ablauföffnung so angeordnet sind, dass deren Entfernung innerhalb des Behandlungsbeckens etwa maximal ist, im Behandlungsbecken aufgenommene lose Aufwuchskörper sowie eine einen Hyperboloidrührkörper aufweisende vertikalrührvorrichtung zum Erzeugen einer Strömung in einer aus den Aufwuchskörpern und dem Abwasser gebildeten Suspension, welche im Bereich einer Welle der Vertikalrührvorrichtung zum Boden des Behandlungsbeckens und im Bereich der wand des Behandlungsbeckens zu einer Oberfläche der Suspension gerichtet ist. - Damit kann auf einfache und kostengünstige Weise eine übermäßige Ansammlung von Aufwuchskörpern im Bereich des Siebs vermieden und gleichzeitig die Suspension umgewälzt werden.

Nach der Erfindung umfasst die Vorrichtung im Behandlungsbecken aufgenommene lose Aufwuchskörper. Dabei kann es sich um extrudierte Kunststoffkörper handeln. Solche Aufwuchskörper weisen zweckmäßigerweise ein spezifisches Gewicht auf, welches geringer ist als das spezifische Gewicht des Abwassers. Aufwuchskörper mit einem spezifischen Gewicht von weniger als 1 g/cm³ erfahren im Abwasser eine Auftriebskraft. Eine solche Auftriebskraft wirkt dem Zusetzen eines Siebs entgegen, welches eine in einer unteren Hälfte des Behandlungsbeckens vorgesehene Ablauföffnung überdeckt bzw. im Hinblick auf einen Durchtritt der Aufwuchskörper verschließt.

Die Vertikalrührvorrichtung umfasst einen Hyperboloidrührkörper. Damit kann auf besonders effiziente Weise eine Strömung aufgeprägt werden.

Die zumindest eine Ablauföffnung ist zweckmäßigerweise im Boden und/oder in der Nähe des Bodens an der Wand vorgesehen.

Die Zulauföffnung kann in einem Bereich vom 0,5- bis zum 1,0-fachen der Wandhöhe vorgesehen sein. D. h. die Zulauföffnung ist zweckmäßigerweise in einer oberen Hälfte des Behandlungsbeckens angeordnet. Sie kann insbesondere in einer maximalen oder nahezu maximalen Entfernung von der Ablauföffnung vorgesehen sein. Damit wird eine besonders hohe Verweildauer des durch die Zulauföffnung zugeführten Abwassers im Behandlungsbecken erreicht.

Nach einer weiteren vorteilhaften Ausgestaltung können auch mehrere Behandlungsbecken hintereinander geschaltet sein. In diesem Fall ist die Zulauföffnung eines stromaufwärts vorgesehenen ersten Behandlungsbeckens zweckmäßigerweise im Bereich des 0,5- bis 1,0-fachen der wandhöhe vorgesehen. Dagegen sind zumindest eine weitere Zulauföffnung eines stromabwärts des ersten Behandlungsbeckens vorgesehenen weiteren Behandlungsbeckens in ihrer Anordnung ähnlich der Ablauföffnung ausgestaltet. D. h. die weitere Zulauföffnung ist in einem Bereich von 0- bis höchstens zum 0,5-fachen der Wandhöhe des weiteren Behandlungsbeckens vorgesehen. Sie kann insbesondere auch im Boden des weiteren Behandlungsbeckens vorgesehen sein. In diesem Fall kann oberhalb einer solchen weiteren Zulauföffnung eine horizontale Platte vorgesehen sein, welche eine durch die weitere Zulauföffnung gerichtete Strömung ablenkt und im wesentlichen entlang des Bodens des weiteren Zulaufbeckens führt. Die weitere Zulauföffnung kann aber auch - wie die Ablauföffnung im ersten Behandlungsbecken - in einem unteren Abschnitt der Wand, insbesondere in der Nähe des Bodens, vorgesehen sein.

Die Ablauföffnung kann im Boden, vorzugsweise in der Nähe der Wand, und/oder auch in der Wand in der Nähe des Bodens vorgesehen sein. Es können auch mehrere solche Ablauföffnungen vorgesehen sein. Als besonders zweckmäßig hat es sich erwiesen, bei einem rechteckig ausgebildeten Behandlungsbecken die Ablauföffnung im Bereich einer Ecke des Bodens vorzusehen. Zum Zurückhalten der Aufwuchskörper kann im Bereich der Ablauföffnung ein Sieb vorgesehen sein. Das Sieb kann sich über einen Rand der Ablauföffnung hinweg erstrecken.

Bei den Aufwuchskörpern kann es sich um extrudierte Kunststoffkörper handeln. Solche Aufwuchskörper weisen zweckmäßigerweise ein spezifisches Gewicht auf, welches geringer ist als das spezifische Gewicht des Abwassers. Aufwuchskörper mit einem spezifischen Gewicht von weniger als 1 g/cm³ erfahren im Abwasser eine Auftriebskraft. Eine solche Auftriebskraft wirkt dem zusetzen eines Siebs entgegen, welches eine in einer unteren Hälfte des Behandlungsbeckens vorgesehene Ablauföffnung überdeckt bzw. im Hinblick auf einen Durchtritt der Aufwuchskörpern verschließt.

Nach einer weiteren vorteilhaften Ausgestaltung sind 10 bis 65%, vorzugsweise 20 bis 50%, eines Volumens des Behandlungsbeckens mit Aufwuchskörpern gefüllt. Damit kann eine besonders effiziente Reinigungsleistung erreicht werden.

Nach einer weiteren vorteilhaften Ausgestaltung der Erfindung ist die Vertikalrührvorrichtung auf dem Boden des Behandlungsbeckens abgestützt. Die Vertikalrührvorrichtung ist zweckmäßigerweise im Zentrum des Behandlungsbeckens angeordnet. Die vertikalrührvorrichtung ermöglicht ein kontinuierliches Umwälzen einer aus den Aufwuchskörpern und dem Abwasser gebildeten Suspension.

Nach einer weiteren vorteilhaften Ausgestaltung ist im Behandlungsbecken eine Belüftungseinrichtung aufgenommen. Damit kann weiter die Reinigungsleistung der Vorrichtung verbessert werden.

Nachfolgend werden Ausführungsbeispiele der Erfindung anhand der Zeichnungen näher erläutert. Es zeigen:
- Fig. 1: eine schematische Querschnittsansicht einer ersten Vorrichtung,
- Fig. 2: eine Draufsicht gemäß Fig. 1,
- Fig. 3: eine schematische Querschnittsansicht einer zweiten Vorrichtung,
- Fig. 4: eine Draufsicht gemäß Fig. 3 und
- Fig. 5: eine Draufsicht gemäß einer dritten Vorrichtung.

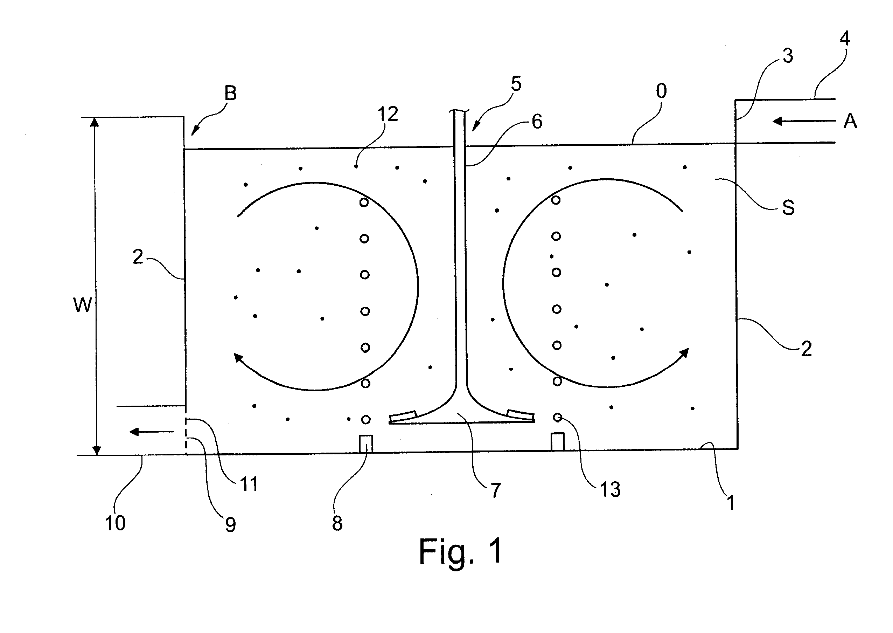

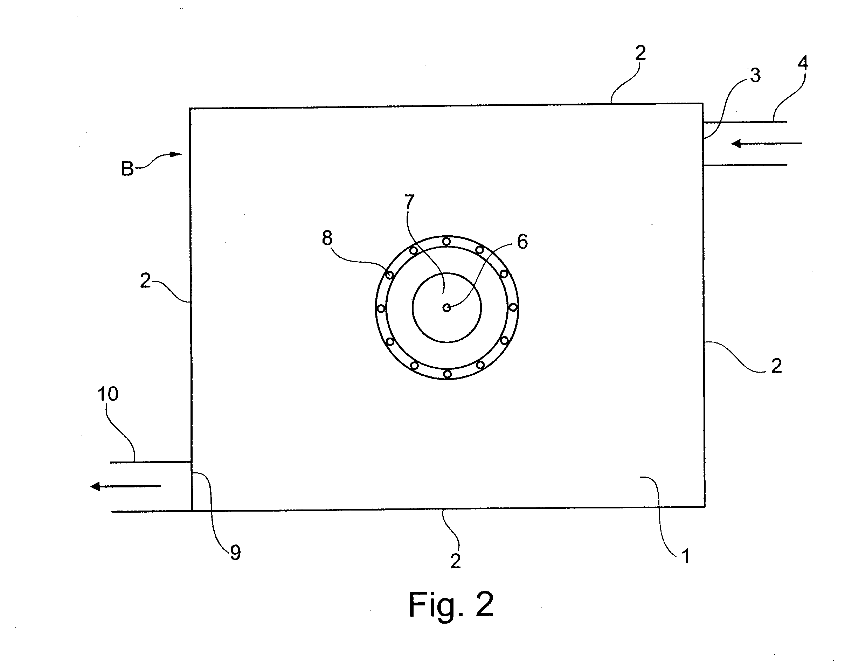

Bei der in den Fig. 1 und 2 gezeigten ersten Vorrichtung ist ein allgemein mit dem Bezugszeichen B bezeichnetes Behandlungsbecken rechteckig ausgebildet. Von einem Boden 1 erstrecken sich vier Wände 2 mit einer Wandhöhe W. Das Behandlungsbecken B ist beispielsweise aus Beton hergestellt. Mit dem Bezugszeichen 3 ist eine Zulauföffnung eines Zulaufkanals 4 bezeichnet. Die Zulauföffnung 3 befindet sich am oberen Rand einer der Wände 2. Ein allgemein mit dem Bezugszeichen 5 bezeichnetes vertikalrührwerk umfasst eine welle 6, an deren Ende ein Hyperboloidrührkörper 7 angebracht ist. Auf dem Boden 1 ist eine Belüftungseinrichtung 8 abgestützt, welche ringförmig ausgebildet und in der Nähe des Hyperboloidrührkörpers 7 angeordnet ist. Die Belüftungseinrichtung 8 kann auch unterhalb des Hyperboloidrührkörpers 7 vorgesehen sein. Eine Ablauföffnung 9 eines Ablaufkanals 10 ist an einer der Wände 2 angeordnet. Die Ablauföffnung 9 ist mit einem Sieb 11 versehen. Das Sieb 11 weist eine Maschenweite auf, welche kleiner als ein Durchmesser von mit dem Bezugszeichen 12 bezeichneten Aufwuchskörpern ist. Die Ablauföffnung 9 befindet sich in einer bodenseitigen unteren Hälfte des Behandlungsbeckens B. Sie befindet sich insbesondere im Bereich des 0,1-bis 0,2-fachen der Wandhöhe W.

Mit dem Bezugszeichen O ist eine Oberfläche einer aus den Aufwuchskörpern 12 und dem Abwasser A gebildeten Suspension S bezeichnet.

Wie insbesondere aus Fig. 2 ersichtlich ist, können die Zulauföffnung 3 und die Ablauföffnung 9 so angeordnet sein, dass deren Entfernung innerhalb des Behandlungsbeckens B etwa maximal ist.

Die Funktion der Vorrichtung ist Folgende:

Durch den zulaufkanal 4 wird Abwasser A dem Behandlungsbecken B zugeführt. Das Abwasser A kommt im Behandlungsbecken B in Kontakt mit Mikroorganismen (hier nicht gezeigt), welche auf den Aufwuchskörpern 12 angesiedelt sind. Durch die Wirkung des Vertikalrührwerks 5 wird der Suspension S eine Strömung aufgeprägt, welche in Fig. 1 mit den Pfeilen abgedeutet ist. Die Strömung ist im Bereich der welle 6 zum Boden 1 hin gerichtet. Im Bereich der Wände 2 ist die Strömung dagegen in Richtung der Oberfläche O gerichtet. Durch die Strömung werden die Aufwuchskörper 12 von der Ablauföffnung 9 weg in Richtung zur Oberfläche O transportiert. Die in Richtung der Oberfläche O gerichtete Bewegung der Aufwuchskörper 12 kann dadurch unterstützt werden, dass sie aus einem Material hergestellt sind, dessen spezifisches Gewicht kleiner als das spezifische Gewicht des Abwassers, beispielsweise kleiner als 1,0 g/cm³, ist. Infolgedessen erfahren die Aufwuchskörper 12 eine Auftriebskraft, welche diese zusätzlich in Richtung der Oberfläche O bewegt.

Mittels der Belüftungseinrichtungen 8 kann die Suspension S zusätzlich belüftet werden. Durch von der Belüftungseinrichtung 8 in Richtung der Oberfläche O aufsteigende Gasblasen 13 erfahren die Aufwuchskörpern 12 eine zusätzliche Auftriebskraft. Diese Auftriebskraft kann durch eine Adsorption von Gasblasen 13 an den Auftriebskörpern 12 und/oder durch eine durch das Aufsteigen der Gasblasen hervorgerufene Aufwärtsströmung unterstützt werden. Zweckmäßigerweise ist eine der Belüftungseinrichtungen 8 in der Nähe des Siebs 11 angeordnet (hier nicht gezeigt). Dadurch wird erreicht, dass die Aufwuchskörper 12 das Sieb 11 nicht zusetzen.

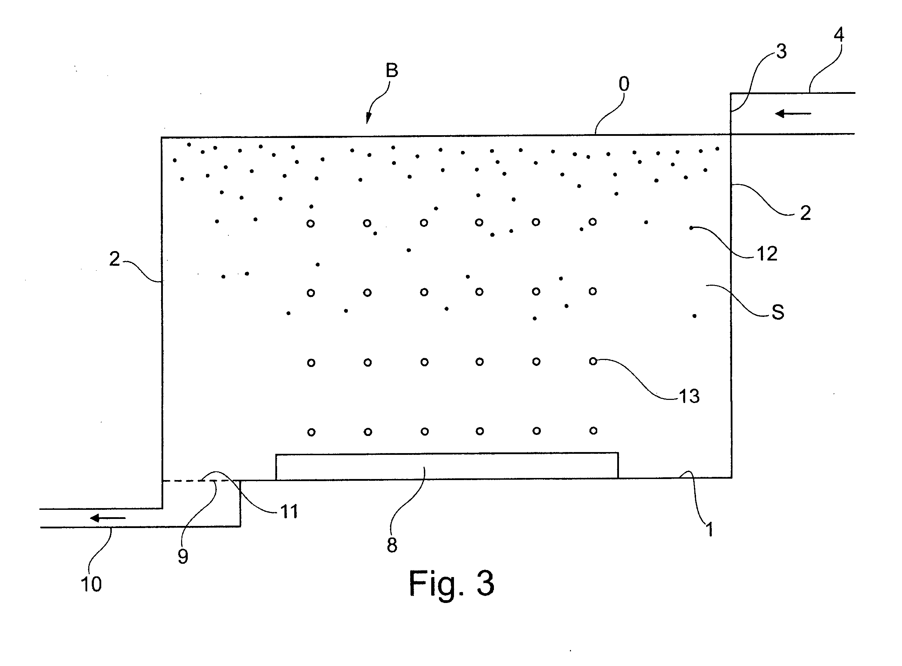

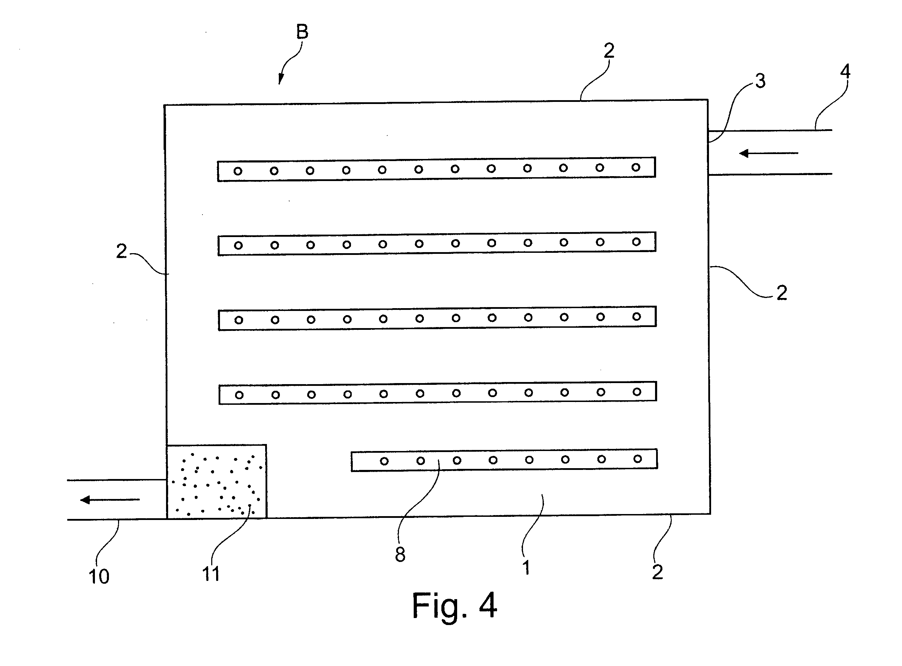

Bei der in den Fig. 3 und 4 gezeigten zweiten Vorrichtung ist im Behandlungsbecken B lediglich eine Belüftungseinrichtung 8 aufgenommen. Hier befindet sich die Ablauföffnung 9 im Boden 1, und zwar im Bereich einer Ecke des Bodens 1. Die Zulauföffnung 3 ist diagonal entgegengesetzt am oberen Rand der Wand 2 vorgesehen. Mit dem Bezugszeichen 13 sind Gasblasen bezeichnet, welche aus der Belüftungseinrichtung 8 in die Suspension S abgegeben werden. Die Gasblasen 13 unterstützen eine in Richtung der Oberfläche O gerichtete Bewegung der Aufwuchskörper 12. Infolgedessen wird das Sieb 11, welches die Ablauföffnung 9 überspannt, im wesentlichen frei von Aufwuchskörpern 9 gehalten.

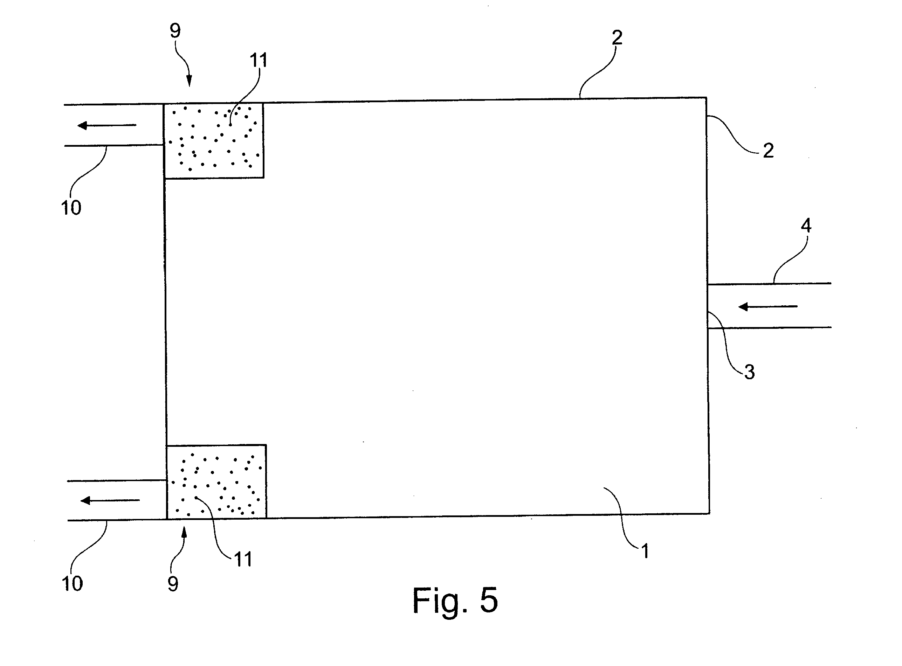

Fig. 5 zeigt eine Draufsicht auf eine dritte Vorrichtung. Dabei sind in zwei benachbarten Ecken im Boden 1 jeweils eine Auslassöffnung 9 eines Auslasskanals 10 vorgesehen, welche mit einem Sieb 11 überdeckt ist. Eine Zulauföffnung 3 ist hier gegenüberliegend den Ablauföffnungen 9 in der Mitte der Wand 2 angeordnet.

Selbstverständlich können die eine oder mehreren Ablauföffnungen 9 auch anders angeordnet sein. Sie können sich beispielsweise entlang einer bodenseitigen Kante im Boden 1 und/oder in der wand 2 erstrecken.

Als Sieb 11 kann auch zumindest ein langgestreckter Schlitz vorgesehen sein, dessen Schlitzweite kleiner als ein Durchmesser der Aufwuchskörper 12 ist. Ein solcher Schlitz kann in der Wand 2 oder im Boden 1 vorgesehen sein.

Als Sieb 11 kann auch eine Drainageleitung auf dem Boden 1 abgestützt sein. Eine solche Drainageleitung weist nach Art eines Siebs Durchbrüche auf, deren Durchmesser kleiner als ein Durchmesser der Aufwuchskörper 12 ist. Die Drainageleitung kann mit dem Ablaufkanal 10 verbunden sein. Die Drainageleitung kann beispielsweise entlang der bodenseitigen Kanten ringförmig verlegt sein.

Stromabwärts des in den Fig. 1 bis 5 gezeigten Behandlungsbeckens B kann zumindest ein weiteres Behandlungsbecken (hier nicht gezeigt) nachgeschaltet sein. Dabei ist es zweckmäßig, dass der Ablaufkanal 10 des Behandlungsbeckens unmittelbar in eine weitere Zulauföffnung (hier nicht gezeigt) im nachgeschalteten weiteren Behandlungsbecken mündet. In diesem Fall ist die weitere Zulauföffnung im weiteren Behandlungsbecken also ähnlich wie die Ablauföffnung 9 entweder in einem weiteren Boden des weiteren Behandlungsbeckens und/oder in einem unteren Abschnitt einer weiteren Wand des weiteren Behandlungsbeckens angeordnet.

### Bezugszeichenliste

- 1: Boden
- 2: Wand
- 3: Zulauföffnung
- 4: Zulaufkanal
- 5: Vertikalrührwerk
- 6: Welle
- 7: Hyperboloidrührkörper
- 8: Belüftungseinrichtung
- 9: Ablauföffnung
- 10: Ablaufkanal
- 11: Sieb
- 12: Aufwuchskörper
- 13: Gasblasen

- A: Abwasser
- B: Behandlungsbecken
- O: Oberfläche
- S: Suspension
- W: Wandhöhe

## Patentansprüche

1. Verfahren zur biologischen Reinigung von Abwasser (A) mit folgenden Schritten:
Bereitstellen eines Behandlungsbeckens (B) mit einem Boden (1) und zumindest einer sich davon mit einer Wandhöhe (W) ersteckenden Wand (2), mit einer Zulauföffnung (3) und mit zumindest einer in einem Bereich vom 0- bis höchstens zum 0,2-fachen der Wandhöhe (W) vorgesehenen Ablauföffnung (9), wobei die Zulauföffnung (3) und die Ablauföffnung (9) so angeordnet sind, dass deren Entfernung innerhalb des Behandlungsbeckens (B) etwa maximal ist,
Zuführen des Abwassers (A) durch die Zulauföffnung (3) in das Behandlungsbecken (B),
Inkontaktbringen des Abwassers (A) mit Mikroorganismen, welche auf im Behandlungsbecken (B) aufgenommenen losen Aufwuchskörpern (12) angesiedelt sind,
Erzeugen einer Strömung mittels einer einen Hyperboloidrührkörper aufweisenden Vertikalrührvorrichtung, so dass eine aus den Aufwuchskörper (12) und dem Abwasser (A) gebildete Suspension (S) im Bereich einer Welle (6) der Vertikalrührvorrichtung (5) zum Boden (1) des Behandlungsbeckens (B) und im Bereich der Wand (2) des Behandlungsbeckens (B) zu einer Oberfläche (O) der Suspension (S) bewegt wird, und
Abführen des durch die Wirkung der Mikroorganismen zumindest teilweise gereinigten Abwassers (A) aus dem Behandlungsbecken (B) durch die Ablauföffnung (9), wobei die Aufwuchskörper (12) mittels eines im Bereich der Ablauföffnung (9) vorgesehenen Siebs (11) im Behandlungsbecken (B) zurückgehalten werden.

2. Verfahren nach Anspruch 1, wobei das Abwasser (A) durch zumindest eine, vorzugsweise in der Nähe einer Wand (2) angeordnete, im Boden (1) des Behandlungsbeckens (B) vorgesehene Ablauföffnung (9) abgeführt wird.

3. verfahren nach einem der vorhergehenden Ansprüche, wobei das Abwasser (A) durch zumindest eine, vorzugsweise in der Nähe des Bodens (1), in einer Wand (2) des Behandlungsbeckens (B) vorgesehene Ablauföffnung (9) abgeführt wird.

4. Vorrichtung zur biologischen Reinigung von Abwasser, umfassend:
ein Behandlungsbecken (B) mit einem Boden (1) und zumindest einer sich davon mit einer Wandhöhe (W) ersteckenden Wand (2), mit einer Zulauföffnung (3) und mit zumindest einer in einem Bereich vom 0- bis höchstens zum 0,2-fachen der Wandhöhe (W) vorgesehenen und mit einen Sieb zum zurückhalten von Aufwuchskörpern (12) versehenen Ablauföffnung (9), wobei die Zulauföffnung (3) und die Ablauföffnung (9) so angeordnet sind, dass deren Entfernung innerhalb des Behandlungsbeckens B etwa maximal ist,
im Behandlungsbecken (B) aufgenommene lose Aufwuchskörper (12), sowie
eine einen Hyperboloidrührkörper aufweisende Vertikalrührvorrichtung (5) zum Erzeugen einer Strömung in einer aus den Aufwuchskörpern (12) und dem Abwasser (A) gebildeten Suspension (S), welche im Bereich einer welle (6) der VertikalrührVorrichtung (5) zum Boden (1) des Behandlungsbeckens (B) und im Bereich der Wand (2) des Behandlungsbeckens (3) zu einer Oberfläche (O) der Suspension (S) gerichtet ist.

5. Vorrichtung nach Anspruch 4, wobei die Ablauföffnung (9) im Boden (1), vorzugsweise in der Nähe der Wand (2) angeordnet, vorgesehen ist.

6. Vorrichtung nach einem der Ansprüche 4 oder 5, wobei die Ablauföffnung (9) in der Wand (2), vorzugsweise in der Nähe des Bodens (1) angeordnet, vorgesehen ist.

7. Vorrichtung nach einem der Ansprüche 4 bis 6, wobei die Aufwuchskörper (12) extrudierte Kunststoffelemente sind.

8. Vorrichtung nach einem der Ansprüche 4 bis 7, wobei 10 bis 65%, vorzugsweise 20 bis 50%, eines Volumens des Behandlungsbeckens (B) mit Aufwuchskörpern (12) ausgefüllt sind.

9. Vorrichtung nach einem der Ansprüche 4 bis 8, wobei die Vertikalrührvorrichtung (5) auf dem Boden (1) des Behandlungsbeckens (B) abgestützt ist.

10. Vorrichtung nach einem der Ansprüche 4 bis 9, wobei im Behandlungsbecken (B) eine Belüftungseinrichtung (8) aufgencmmen ist.

## Claims

1. A method for biologically cleaning wastewater (A), comprising the following steps:
providing a treatment basin (B) comprising a bottom (1) and at least one wall (2) extending therefrom with a wall height (W), an inlet opening (3), and at least one outflow opening (9) that is provided in a region between 0 and no more than 0.2 times the wall height, wherein the inlet opening (3) and the outflow opening (9) are arranged such that the distance thereof inside the treatment basin (B) is approximately at the maximum;
supplying the wastewater (A) through the inlet opening (3) into the treatment basin (B);
bringing the wastewater (A) in contact with microorganisms colonizing loose biofilm substrate bodies (12) accommodated in the treatment basin (B);
generating a flow by means of a vertical agitator comprising a hyperboloid agitator body, so that a suspension (S) that is formed of the biofilm substrate bodies (12) and the wastewater (A) is moved toward the bottom (1) of the treatment basin (B) in the region of a shaft (6) of the vertical agitator (5) and is moved toward a surface (O) of the suspension (S) in the region of the wall (2) of the treatment basin (B); and
discharging the wastewater (A), which has been at least partially cleaned by the action of the microorganisms, from the treatment basin (B) through the outflow opening (9), wherein the biofilm substrate bodies (12) are retained in the treatment basin (B) by means of a screen (11) provided in the region of the outflow opening (9).

2. The method according to claim 1, wherein the wastewater (A) is discharged through at least one outflow opening (9) provided in the bottom (1) of the treatment basin (B), the outflow opening being preferably arranged in the vicinity of a wall (2).

3. A method according to any one of the preceding claims, wherein the wastewater (A) is discharged through at least one outflow opening (9) provided in a wall (2) of the treatment basin (B), the outflow opening being preferably arranged in the vicinity of the bottom (1).

4. A device for biologically cleaning wastewater, comprising:
a treatment basin (B) comprising a bottom (1) and at least one wall (2) extending therefrom with a wall height (W), an inlet opening (3), and at least one outflow opening (9) which is provided in a region from 0 to no more than 0.2 times the wall height (W) and is equipped with a screen for retaining biofilm substrate bodies (12), wherein the inlet opening (3) and the outflow opening (9) are arranged such that the distance thereof inside the treatment basin (B) is approximately at the maximum;
loose biofilm substrate bodies (12) accommodated in the treatment basin (B); and
a vertical agitator (5) comprising a hyperboloid agitator body for generating a flow in a suspension (S) formed of the biofilm substrate bodies (12) and the wastewater (A), the flow being directed toward the bottom (1) of the treatment basin (B) in the region of a shaft (6) of the vertical agitator (5) and being directed toward a surface (O) of the suspension (S) in the region of the wall (2) of the treatment basin (B).

5. The device according to claim 4, wherein the outflow opening (9) is provided in the bottom (1), preferably in the vicinity of the wall (2).

6. The device according to either claim 4 or 5, wherein the outflow opening (9) is arranged in the wall (2), preferably in the vicinity of the bottom (1).

7. A device according to any one of claims 4 to 6, wherein the biofilm substrate bodies (12) are extruded plastic elements.

8. A device according to any one of claims 4 to 7, wherein 10 to 65%, and preferably 20 to 50%, of a volume of the treatment basin (B) is filled with biofilm substrate bodies (12).

9. A device according to any one of claims 4 to 8, wherein the vertical agitator (5) is supported on the bottom (1) of the treatment basin (B).

10. A device according to any one of claims 4 to 9, wherein an aeration unit (8) is accommodated in the treatment basin (B).

## Revendications

1. Procédé d'épuration biologique des eaux usées (A) comportant les opérations suivantes:
mise à disposition d'un bassin de traitement (B) comprenant un fond (1) et au moins d'une part une paroi (2) qui s'élève du fond en définissant une hauteur de paroi (W), et qui comporte un orifice d'amenée (3) et au moins un orifice d'évacuation (9) prévu dans une zone allant de 0 fois à maximum 0,2 fois la hauteur de paroi (W), l'orifice d'amenée (3) et l'orifice d'évacuation (9) étant situés de façon à ce que leur distance à l'intérieur du bassin de traitement (B) soit approximativement maximale,
arrivée des eaux usées (A) par le biais de l'orifice d'amenée (3) dans le bassin de traitement (B),
mise en contact des eaux usées (A) avec des microorganismes qui colonisent des supports de colonisation (12) épars logés dans le bassin de traitement (B),
génération d'un écoulement au moyen d'un agitateur vertical présentant un corps d'agitation hyperboloïde de façon à ce qu'une suspension (S) formée à partir des supports de colonisation (12) et des eaux usées (A) se déplace dans la zone d'un arbre (6) de l'agitateur vertical (5) vers le fond (1) du bassin de traitement (B) et dans la zone de la paroi (2) du bassin de traitement (B) vers une surface (O) de la suspension (S), et
évacuation hors du bassin de traitement (B), par l'orifice d'évacuation (9), des eaux usées (A) au moins partiellement épurées par l'action des microorganismes, les supports de colonisation (12) étant retenus dans le bassin de traitement (B) par un tamis (11) prévu dans la zone de l'orifice d'évacuation (9).

2. Procédé selon la revendication 1, selon lequel les eaux usées (A) sont évacuées par au moins un orifice d'évacuation (9) prévu dans le fond (1) du bassin de traitement (B), de préférence situé à proximité d'une paroi (2).

3. Procédé selon l'une des revendications précédentes, selon lequel les eaux usées (A) sont évacuées par au moins un orifice d'évacuation (9) prévu dans une paroi (2) du bassin de traitement (B), de préférence à proximité du fond (1).

4. Dispositif d'épuration biologique des eaux usées, comportant:
un bassin de traitement (B) comprenant un fond (1) et au moins d'une part une paroi (2) qui s'élève du fond en définissant une hauteur de paroi (W), et qui comporte un orifice d'amenée (3) et au moins un orifice d'évacuation (9) prévu dans une zone allant de 0 fois à maximum 0,2 fois la hauteur de paroi (W) et, d'autre part, un tamis pour retenir des supports de colonisation (12), l'orifice d'amenée (3) et l'orifice d'évacuation (9) étant situés de façon à ce que leur distance à l'intérieur du bassin de traitement (B) soit approximativement maximale,
des supports de colonisation (12) épars logés dans le bassin de traitement (B) ainsi qu'
un agitateur vertical (5) présentant un corps d'agitation hyperboloïde servant à la génération d'un écoulement dans une suspension (S) formée à partir des supports de colonisation (12) et des eaux usées (A), lequel est dirigé dans la zone d'un arbre (6) de l'agitateur vertical (5) vers le fond (1) du bassin de traitement (B) et dans la zone de la paroi (2) du bassin de traitement (B) vers une surface (O) de la suspension (S).

5. Dispositif selon la revendication 4, dans lequel l'orifice d'évacuation (9) est prévu dans le fond (1), de préférence situé à proximité de la paroi (2).

6. Dispositif selon l'une des revendications 4 ou 5, dans lequel l'orifice d'évacuation (9) est prévu dans la paroi (2), de préférence situé à proximité du fond (1).

7. Dispositif selon l'une des revendications 4 à 6, dans lequel les supports de colonisation (12) sont des éléments en matière plastique extrudés.

8. Dispositif selon l'une des revendications 4 à 7, dans lequel 10 à 65%, de préférence 20 à 50%, d'un volume du bassin de traitement (B) sont remplis avec des supports de colonisation (12).

9. Dispositif selon l'une des revendications 4 à 8, dans lequel l'agitateur vertical (5) est appuyé sur le fond (1) du bassin de traitement (B).

10. Dispositif selon l'une des revendications 4 à 9, dans lequel un dispositif d'aération (8) est logé dans le bassin de traitement (B).
